# EUROPEAN PATENT APPLICATION

(11) **EP 1 952 968 A2**
(43) Date of publication of application: **06.08.2008**
(21) Application number: 07111251.0
(22) Date of filing: 28.06.2007
(51) Int. Cl.: B29C 47/12, B29C 47/88, B29C 44/30, B65D 39/00

(54) **Device for forming a bar for manufacturing synthetic caps and method of production of the bar**

(30) Priority: 31.01.2007 IT BS20070014
(71) Applicant: Capuzzi System S.r.l., 25010 Brescia (IT)
(72) Inventor: Capuzzi, Claudio, 25125 Brescia (IT)
(74) Representative: Crippa, Paolo Ernesto

(57) **Abstract**

The object of the present invention is a forming device (6) for producing a bar of synthetic material, for example of expansible plastic material, intended for the production of synthetic caps. The device comprises a first chain of half-moulds and a second chain of half-moulds that couple along the common portion of an annular path. The half-mould (8a, 8b, 8c) is delimited by a front face (16) and by a back face (18) and the half-space (10) inside the half-mould is free from projections and/or grooves between said faces (16, 18). The forming device allows producing a bar of constant diameter of expansible material, then cut for producing synthetic caps.

## Description

The present invention relates to a forming device for producing a bar for manufacturing synthetic caps, for example of plastic material, in particular for bottles.

Said caps consist of a small solid cylinder suitable for being inserted into the opening of the bottles, especially for wine.

The production of synthetic caps has undergone considerable increase over the last years, essentially thanks to the low production costs, if compared to those of corks, to the wide availability of raw materials and to the fact that the plastic material is virtually inert relative to the wine contained in the bottle.

For the production of synthetic caps it is possible to use an injection moulding process, using a mould and a punch with a large number of impressions. However, such process does not ensure, especially when particular plastic materials tending to expansion are used, a good repeatability of the weight and geometry features of the caps obtained.

On the other hand, an extrusion process is very effective, wherein a device produces a cord comprised of a succession of cylindrical elements connected to each other by a tang of small diameter. An extrusion device for the production of synthetic caps is described, for example, in Italian patent IT 1326870, of which the Applicant is the holder.

The cord is then cut at the tang by a cutting device, for making a semi-finished cap intended for subsequent processing steps for the production of the finished cap. A cutting device is disclosed, for example, in the European patent application No. 06126294.5, by the same Applicant.

The semi-finished cap is then healed by hot compression at the two ends, for reducing the residual tang.

Such operation causes a structural transformation of the cap end surfaces, since the plastic material, heated and then cooled down, forms a compact and smooth structure.

A drawback for the caps thus manufactured is that the end surface, smooth and compact, lets an observer see that the cap is not made of cork, which has a porous appearance rich in grains.

For this reason, synthetic caps are also produced from extrusion bar, as explained hereinafter.

A bar of soft plastic material exits from an extruder, which crosses a plurality of fixed perforated calibrators, from which a calibrated bar exits. The advancement of the soft bar and of the calibrated bar takes place by pulling the calibrated bar. The calibrated bar is then cut to make the caps.

The end surface of the synthetic caps from the extrusion bar is porous, since no healing is performed.

However, the production of synthetic caps from extrusion bar is particularly difficult as regards maintaining a constant diameter of the calibrated bar and thus of the caps made.

The object of the present invention is to obtain a forming device for producing a bar of synthetic material, in particular intended for manufacturing bottle caps, which should overcome the disadvantages mentioned with reference to the prior art.

Such object is achieved by a device according to the following claim 1. The dependent claims describe embodiment variations.

Such object is further achieved by a method for producing a bar according to claim 10. The dependent claims thereof describe embodiment variations of the method.

The features and advantages of the device and of the method according to the present invention will appear more clearly from the following description, made by way of an indicative and non-limiting example with reference to the annexed figures, wherein:

- figure 1a shows a schematic top view of an apparatus for manufacturing synthetic caps, comprising a forming device for producing a bar, according to the present invention;

- figure 1b shows a diagram of annular paths along which chains of half-moulds of the forming device of figure 1 are arranged;

- figure 2 shows a perspective view of a portion of a chain of half-moulds of the forming device, with a succession of three coupled half-moulds, and

- figure 3 shows a front view of a half-mould according to a further embodiment of the present invention.

In accordance with the annexed figures, reference numeral 1 globally indicates an apparatus for manufacturing synthetic caps for bottles, in particular for wine.

The caps consist of a small solid cylinder, suitable for being inserted into the opening of the bottle. The material used for production is an expansible material, that is, a material that in predetermined circumstances, exhibits the tendency to increase its specific volume.

For example, the material comprises a base material (such as a plastic resin) and an expander, mixed to each other. Sufficiently heated, the mixture of base material and expander exhibits a tendency to expansion.

Or, according to a further example, the base material is combined with a gas, generally carbon dioxide which, injected in the base material, imparts a tendency to expand to the latter, at the melted state.

When solidified, the cap exhibits a nominal diameter generally larger than the nominal diameter of the bottle opening; however, the solidified material is sufficiently soft, by virtue of its porosity, to be inserted by compression in the bottle opening.

Apparatus 1 comprises an extruder device 2 suitable for being fed with a source material, consisting of the base material and an expander or of the base material and an expansion gas. The extruder device is further suitable for melting the source material, ejecting it as soft material.

In particular, the extruder device 2 comprises a pipe 4 from which the soft material exits.

Moreover, apparatus 1 comprises a forming device 6, operatively coupled to the extruder device, suitable for receiving the soft material and forming a continuous bar of formed material Bf.

The extruder device 6 comprises a first chain of half-moulds and a second chain of half-moulds; each chain comprises a plurality of half-moulds arranged in a succession.

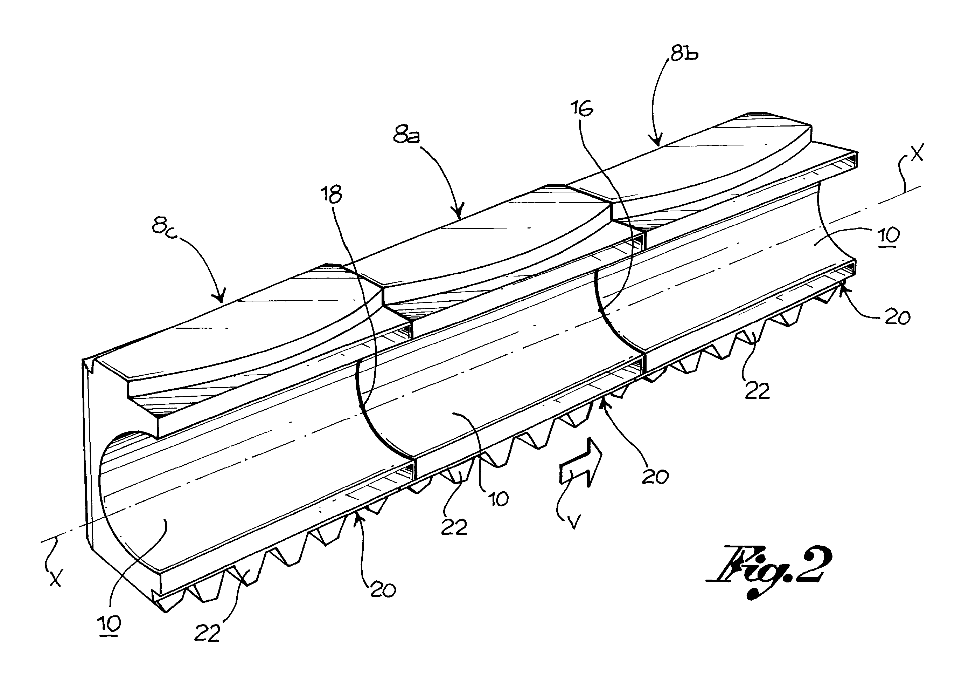

Figure 2 shows a portion of a chain of half-moulds with a succession of three half-moulds coupled to each other. In particular, a reference half-mould 8a, a previous half-mould 8b and a following half-mould 8c are visible, sorted according to the advancement direction V.

Each half-mould exhibits a half-space 10.

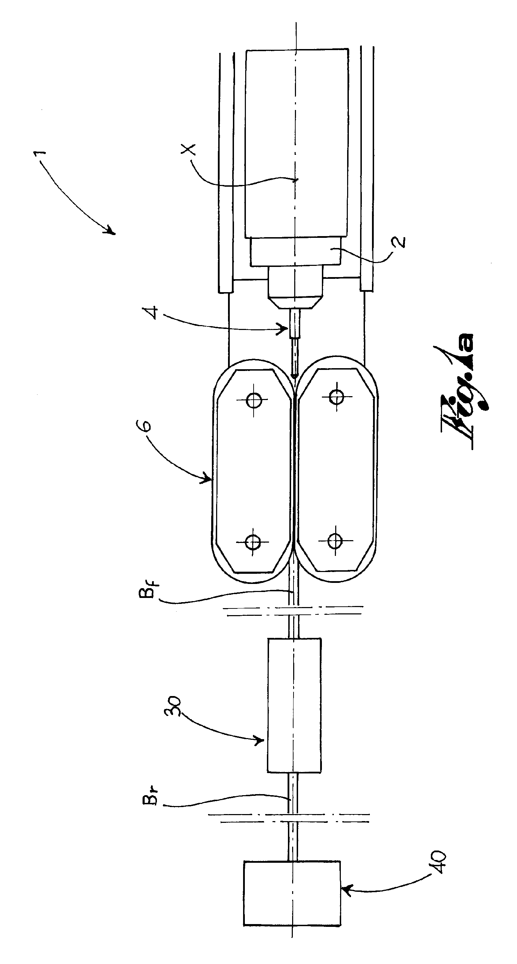

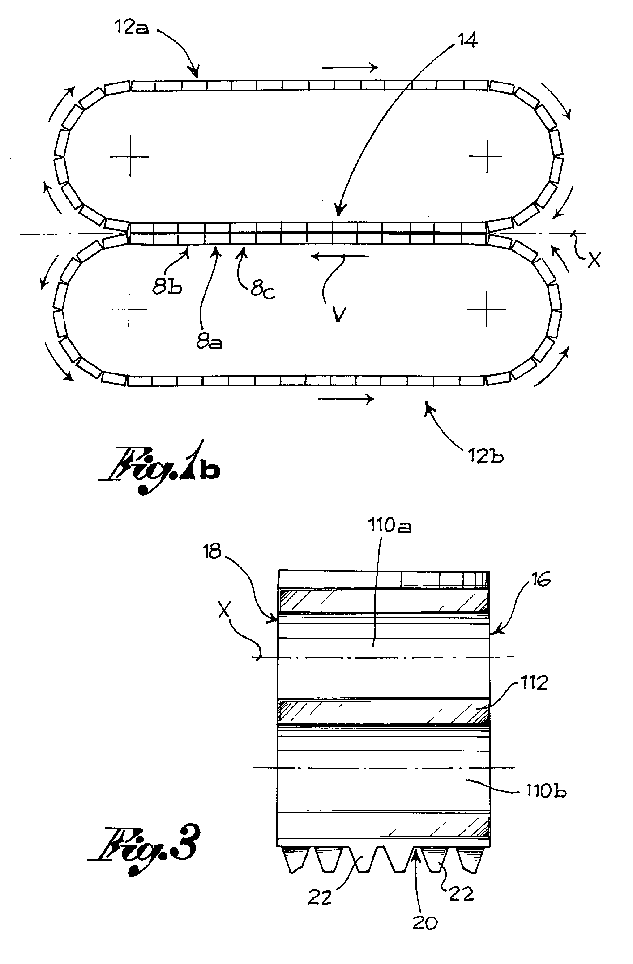

Each chain of the forming device 6 is arranged so as to form annular paths 12a, 12b along which said half-moulds are movable along an advancement direction (figure 1b).

The annular paths 12a, 12b have a common portion 14 which develops along a coupling direction X.

Along the common portion 14 of the annular paths 12a, 12b, some half-moulds of the first chain couple to respective half-moulds of the second chain, so that the half-spaces of the coupled half-moulds define forming spaces for the bar.

Along the coupling direction X, the reference half-mould 8a is delimited by a front face 16, in contact with the previous half-mould 8b of the same chain, and by a back face 18, in contact with the following half-mould 8c of the same chain.

In other words, the half-space 10 of the half-mould extends between the front face 16 and the back face 18.

Said half-space 10 is free from projections and/or grooves between said front face 16 and said back face 18.

In other words, the inner surface of the half-space is smooth, that is, without depressions and circumferential projections, so that the forming space obtained by the coupling of two facing half-spaces exhibits a cylindrical circular surface without circumferential grooves or circumferential projections.

As is understood, moreover, along the coupling direction, the succession of forming spaces forms a continuous cylindrical surface, inside which the bar of soft material is formed.

Preferably, moreover, the inner surface of the half-space 10 is free from holes.

Moreover, according to a preferred embodiment, the extruder device comprises moving means suitable for engaging with said half-moulds for moving them.

In particular, the half-mould is engaged with said moving means at a bottom surface 20 and comprises at least one tooth 22, protruding from said bottom surface 20, suitable for engaging with said moving means.

According to an embodiment variation, the half-mould exhibits a plurality of half-spaces 110a, 110b, each extending from the front face to the back face, for example two superimposed, parallel to the coupling direction X (figure 3).

The half-moulds made according to such variation, coupling to each other, form a plurality of forming spaces, each extending from the front face to the back face, for example two superimposed, separate from each other.

Advantageously, the extruder device made according to such variation allows producing a plurality of bars, for example two, at the same time.

According to a preferred embodiment, moreover, apparatus 1 comprises cooling means 30, air or water powered, arranged downstream of the extruder device, suitable for cooling the bar produced.

The cooling means 30 are operatively connected to the extruder device for being fed with the formed bar Bf. A cooled bar Br exits from the cooling means.

Moreover, apparatus 1 comprises cutting means 40 suitable for cutting the cooled bar Br for making a plurality of caps.

Innovatively, the extruder device according to the present invention allows obtaining a continuous bar of synthetic material for which the nominal diameter is substantially constant, so that the bar may be cut and make a plurality of caps without the need for healing operations.

Advantageously, the soft material that exits from the extruder exhibits a tendency to expansion; such tendency to the expansion is of great help to the production process.

In fact, it has been found that inside the forming space, the material tending to the expansion exerts an action on the space walls, making an adhesion that generates friction forces that cooperate to the movement of the bar, both being formed and already formed.

Advantageously, therefore, the formed bar does not need draft means which, as it happens in the prior art, deform the bar making it difficult to maintain a constant nominal diameter.

According to a further advantageous aspect, the length of the common path, and thus the number of half-moulds, is selected so that along the common path itself, the bar of soft material solidifies in a sufficient manner for ensuring that the formed bar does not undergo geometric deformations that would impair the cap geometry.

According to an even further advantageous aspect, the solidification of the soft bar partly occurs inside the forming space so the material, when still hot and tending to expand, is constrained by the walls of the forming space to maintain the desired shape and the dimensions, whereas at the output from the common portion, the bar is sufficiently solidified not to undergo deformations by contact with sliding supports, for example a belt or a slide.

It is clear that a man skilled in the art can make changes and adjustments to the device and method described above in order to meet specific and incidental needs, all falling within the scope of protection defined in the following claims.

## Claims

1. Forming device (6) for producing a bar of synthetic material, for example of plastic material, comprising a first chain of half-moulds and a second chain of half-moulds, wherein
a) each chain comprises a plurality of half-moulds (8a,8b,8c) arranged in a succession, wherein each half-mould exhibits at least one half-space (10), and
b) each chain is arranged so as to form annular paths (12a,12b) along which said half-moulds are movable along an advancement direction (V), said paths having a common portion (14) that develops along a coupling direction (X), along which some half-moulds of the first chain couple to respective half-moulds of the second chain, so that the half-spaces of the coupled half-moulds define forming spaces for the bar;
wherein, along said coupling direction, the half-mould (8a) is delimited by a front face (16), suitable for the contact with a previous half-mould (8b) of the same chain, and by a back face (18), suitable for the contact with a following half-mould (8c) of the same chain,
and wherein the half-space (10) of the half-mould extends between said front face (16) and said back face (18) and is free from projections and/or grooves between said faces (16, 18).

2. Device according to the previous claim, wherein the forming space exhibits a circular cylindrical surface relative to the coupling direction.

3. Device according to claim 1 or 2, wherein the half-space of the half-mould exhibits a surface without holes.

4. Device according to any one of the previous claims, comprising moving means suitable for engaging with said half-moulds for moving them,
wherein said half-mould is engaged with said moving means at a bottom surface (20), and
wherein said half-mould comprises at least one tooth (22), protruding from said bottom surface, suitable for engaging with said moving means.

5. Device according to any one of the previous claims,
wherein the succession of forming spaces along said coupling direction forms a circular cylindrical surface having constant diameter.

6. Device according to any one of the previous claims,
wherein said half-mould exhibits a plurality of half-spaces (110a,110b), each extending between the front face and the back face, so that the two coupled half-moulds form a plurality of forming spaces separate from each other, for producing a plurality of bars at the same time.

7. Device according to claim 6, wherein said half-space exhibits two superimposed half-spaces.

8. Device according to any one of the previous claims,
wherein the length of the common portion along said coupling direction (X) is such that the bar in output from the common portion is sufficiently solidified as to not undergo deformations by contact with sliding supports.

9. Apparatus for the production of a bar comprising
- a forming device made according to any one of the previous claims suitable for producing a formed bar (Bf);
- cooling means, arranged downstream of the extruder device and operatively connected thereto for receiving said formed bar (Bf), suitable for cooling the formed bar for making a cooled bar (Br).

10. Apparatus according to claim 9, wherein said cooling means are air powered.

11. Apparatus according to claim 9, wherein said cooling means are water powered.

12. System for manufacturing synthetic caps for bottles, comprising
- an apparatus according to any one of claims 1 to 11,
- cutting means (40) suitable for cutting the bar for making a plurality of caps.

13. Method for producing a bar of synthetic material that can be performed by the forming device according to any one of claims 1 to 8, comprising the steps of:
- providing for an expansible source material;
- realising the conditions for the expansion of the source material;
- feeding the source material to an extruder and making the soft material exit therefrom;
- moving the chains of the half-moulds of the forming device;
- feeding the soft material to the forming device, injecting the soft material between the chains of half-moulds, at the beginning of the common portion of the path.

14. Method according to claim 13, wherein the step of realising the expansion conditions comprises the step of heating the source material.

15. Method according to claim 13, wherein the step of realising the expansion conditions comprises the step of injecting an expansion gas in the source material.

16. Method according to claim 14 or 15, comprising the step of cooling the formed bar.

17. Method for manufacturing synthetic caps for bottles that can be carried out by the system according to claim 12, comprising the steps of
- carrying out the method for producing a bar according to any one of claims 13 to 16;
- cutting the bar for making the caps.
